# EUROPÄISCHE PATENTSCHRIFT

(11) **EP 2 372 202 B1**
(45) Veröffentlichungstag und Bekanntmachung des Hinweises auf die Patenterteilung: **15.05.2013**
(21) Anmeldenummer: 10158265.8
(22) Anmeldetag: 29.03.2010
(51) Int. Cl.: F16K 31/05, F16B 21/09

(54) **Kopplung eines Stellelements eines Ventils mit einem Anschlusselement eines Stellantriebs**
Coupling of a positioning element of a valve with a connecting element of an actuator
Couplage d'un élément de positionnement d'une soupape avec un élément de raccordement d'un mécanisme de commande

(43) Veröffentlichungstag der Anmeldung: 05.10.2011
(73) Patentinhaber: Siemens Aktiengesellschaft, 80333 München (DE)
(72) Erfinder: Evertz, Jörg, 8903, Birmensdorf (CH); Sprecher, Martin, 6330, Cham (CH)

(56) Entgegenhaltungen:
- DE-U1- 9 114 948
- US-A1- 2004 216 888
- Anonymous: "Die richtige Wahl für die Um- und Nachrüstung von HLK-Regelventilen" Belimo Website 7. April 2004 (2004-04-07), XP002599300 Gefunden im Internet: URL:http://www.belimo.ch/pdf/d/NEWS_VA1_d. pdf [gefunden am 2010-09-03]

## Beschreibung

Die vorliegende Erfindung betrifft das technische Gebiet der Heizungs- Lüftungs- und Klimatechnik. Die vorliegende Erfindung betrifft insbesondere eine Vorrichtung zum mechanischen Koppeln eines Stellelements eines Ventils mit einem Anschlusselement eines Stellantriebs, wobei (a) das Stellelement zum Zwecke einer Verstellung des Ventils entlang einer z-Achse verschiebbar ist und wobei (b) das Anschlusselement bei einer entsprechenden Orientierung des Stellantriebs relativ zu dem Ventil mittels des Stellantriebs ebenfalls entlang der z-Achse verschiebbar ist.

HLK-Ventile werden typischerweise mit einem elektromotorischen Stellantrieb betätigt. Um dabei einer bestimmte Position des Stellantriebs eine genau definierte Stellung des Ventils zuordnen zu können, was eine unabdingbare Voraussetzung für eine präzise Ansteuerung des Ventils ist, muss zum einen die relative Lage zwischen Stellantrieb und Ventil genau definiert sein. Ferner ist es für einen zuverlässigen Betrieb eines Ventils vorteilhaft und für bestimmte Applikationen sogar zwingend erforderlich, ein Stellelement (typischerweise einen Stößel) eines Ventils möglichst spielfrei mit einem Anschlusselement eines Stellantriebs zu koppeln. Dabei ist zu bedenken, dass eine typische HLK-Anlage eine Vielzahl von steuerbaren Ventilen aufweist und dass bei der Montage oder der Wartung einer HLK-Anlage der zuständige Monteur häufig nicht immer mit maximaler Sorgfalt arbeitet.

Aus US2004/216888 A ist eine Vorrichtung zum mechanischen Koppeln eines Stellelements eines Ventils mit einem Anschlusselement eines Stellantriebs bekannt.

Der Erfindung liegt die Aufgabe zugrunde, die Kopplung zwischen Stellantrieb und Ventil in Hinblick auf (a) eine erhöhte Stellgenauigkeit des Ventils und (b) auf eine einfache, fehlerfreie, komfortable und schnelle Montage zu verbessern.

Diese Aufgabe wird gelöst durch den Gegenstand des unabhängigen Patentanspruchs 1. Vorteilhafte Ausführungsformen der vorliegenden Erfindung sind in den abhängigen Ansprüchen beschrieben.

Gemäß einem ersten Aspekt der Erfindung wird eine Vorrichtung zum mechanischen Koppeln eines Stellelements eines Ventils mit einem Anschlusselement eines Stellantriebs beschrieben, wobei das Stellelement zum Zwecke einer Verstellung des Ventils entlang einer z-Achse verschiebbar ist und wobei das Anschlusselement bei einer entsprechenden Orientierung des Stellantriebs relativ zu dem Ventil mittels des Stellantriebs ebenfalls entlang der z-Achse verschiebbar ist. Die beschriebene Vorrichtung weist auf (a) ein erstes Koppelelement, welches mit dem Stellelement derart koppelbar ist, dass zwischen dem ersten Koppelelement und dem Stellelement entlang der z-Achse zumindest eine gewisse Bewegungsfreiheit gegeben ist, (b) ein zweites Koppelelement, welches mit dem Anschlusselement koppelbar, (c) ein Verbindungselement, welches die beiden Koppelelemente in beweglicher Weise miteinander verbindet, und (d) eine Klemmeinrichtung, welche an dem ersten Koppelelement und/oder an dem zweiten Koppelelement angeordnet ist und welche derart ausgebildet ist, dass bei einer Betätigung der Klemmeinrichtung (d1) die beiden Koppelelemente gegeneinander verspannt werden und (d2) ein mit dem ersten Koppelelement gekoppeltes Stellelement mit den beiden Koppelelementen entlang der z-Achse spielfrei verklemmt wird.

Der beschriebenen Koppelvorrichtung liegt die Erkenntnis zugrunde, dass bei einer Herstellung einer mechanischen Kopplung zwischen dem Stellelement des Ventils und dem Anschlusselement des Stellantriebs zunächst zumindest ein gewisses Spiel bzw. eine gewisse Bewegungsfreiheit in axialer Richtung (z-Richtung) gegeben ist. Dadurch kann eine Bedienperson auf einfache Weise und insbesondere ohne eine ungewollte Verklemmung zwischen dem ersten Koppelelement und dem Stellelement zu befürchten das erste Koppelelement und das Stellelement miteinander koppeln. Danach kann dieses Spiel in axialer Richtung durch die Betätigung der Klemmeinrichtung kontinuierlich bis auf "Null" reduziert werden, so dass das System bestehend aus den beiden Koppelelementen und dem Stellelement zumindest in axialer Richtung spielfrei wird.

Unter der Voraussetzung dass die relative axiale Lage zwischen dem Stellantrieb und dem Ventil genau definiert ist kann infolge der spielfreien Klemmung des Stellelements einer bestimmten Position des Stellantriebs immer mit hoher Genauigkeit eine bestimmte Stellung des Ventils zugeordnet werden. Dadurch kann durch den Stellantrieb eine besonders präzise Steuerung oder Regelung des Ventils erfolgen.

Das Verbindungselement kann jede Art von Befestigungselement sein, welche im Zusammenhang mit der Geometrie des ersten Koppelelements und/oder des zweiten Koppelelements eine gewisse relative Bewegungsfreiheit zwischen beiden Koppelelementen erlaubt. Das Verbindungelement kann beispielsweise eine feste Schraubverbindung oder eine Niete sein.

Das Stellelement des Ventils kann ein zylinderförmiger Stift, beispielsweise ein gewöhnlicher Stößel, sein.

Die beschriebene Vorrichtung hat den Vorteil, dass der Stellelements eines Ventils in beliebiger Drehwinkellage mit dem Anschlusselement des Stellantriebs mechanisch verbunden bzw. gekoppelt werden kann. Ein weiterer Vorteil der beschriebenen Vorrichtung besteht darin, dass die Vorrichtung so ausgebildet werden kann, dass eine falsche Verbindung des Stellelements mit dem Anschlusselement zuverlässig verhindert werden kann.

Gemäß einem Ausführungsbeispiel der Erfindung weisen das erste Koppelelement und/oder das zweite Koppelelement eine flächige Form auf. Dies hat den Vorteil, dass die gesamte Koppelvorrichtung insbesondere in axialer Richtung in einer kompakten Bauform realisiert werden kann. Dadurch kann der Stellantrieb wiederum nahe bei dem Ventil angeordnet sein so dass auch ein gesamtes Ventilsystem bestehend aus Ventil und Stellantrieb kompakt aufgebaut werden kann. Dies ist insbesondere bei größeren HLK-Anlagen, welche eine Vielzahl von derartigen nahe beieinander angeordneten Ventilsystemen aufweisen, von Vorteil.

Unter dem Begriff "flächig" ist in diesem Zusammenhang insbesondere zu verstehen, dass die Höhe bzw. die Dicke des jeweiligen Koppelelements deutlich kleiner ist als die Breite und/oder die Länge des Koppelelements. Der Begriff "flächig" soll in diesem Zusammenhang keineswegs ausschließen, dass das jeweilige Koppelelement Öffnungen, Einschnitte oder sonstige Ausnehmungen aufweist. Die flächige Form kann im Wesentlichen durch die Außenabmessungen des jeweiligen Koppelelements definiert sein.

Das erste Koppelelement und/oder das zweite Koppelelement kann beispielsweise eine Platte, insbesondere ein Metallplatte, sein.

Es wird darauf hingewiesen, dass das erste und/oder das zweite Koppelelement anstelle einer flächigen Platte auch mittels eines auf geeignete Weise gebogenen Drahts realisiert werden kann.

Gemäß der Erfindung weist das erste Koppelelement eine zentrale Öffnung auf, welche einen ersten Öffnungsbereich und einen zweiten Öffnungsbereich umfasst. Dabei ist der erste Öffnungsbereich derart dimensioniert, dass zumindest ein oberer Abschnitt des Stellelements durch den ersten Öffnungsbereich durchführbar ist. Ferner ist der zweite Öffnungsbereich derart dimensioniert, dass eine den zweiten Öffnungsbereich begrenzende Kante des ersten Koppelelements in eine an dem oberen Abschnitt des Stellelements ausgebildete Ausnehmung eingreifen kann, so dass abgesehen von der gewissen Bewegungsfreiheit zwischen dem ersten Koppelelement und dem Stellelement entlang der z-Achse eine Fixierung des Stellelements an dem ersten Koppelelement erfolgt.

Anschaulich gesprochen kann dies bedeuten, dass die beiden Öffnungsbereiche unterschiedlich groß sind. Durch den ersten größeren Öffnungsbereich kann der obere Abschnitt des Stellelements durchgeführt werden. Der zweite Öffnungsbereich kann so klein sein, dass er den oberen Abschnitt des Stellelements nur deshalb aufnehmen kann, weil darin die genannte Ausnehmung ausgebildet ist. In diese Ausnehmung kann nämlich eine Kante des ersten Koppelelements oder ein in den zweiten Öffnungsbereich hineinragender Vorsprung der ersten Koppelelements eingreifen und so für die beschriebene spielbehaftete axiale formschlüssige Fixierung des Stellelements an dem ersten Koppelelement sorgen. Die anfängliche axiale Bewegungsfreiheit des Stellelements in Bezug zu dem ersten Koppelelement kann beispielsweise wenige Millimeter betragen.

Die zentrale Öffnung, welche nicht unbedingt exakt in der Mitte des ersten Koppelelements ausgebildet sein muss, kann beispielsweise die Form eines Schlüssellochs haben. Das erste Koppelelement kann demzufolge eine sog. Schlüssellochplatte sein oder zumindest annähernd die Form einer derartigen Schlüssellochplatte aufweisen.

Gemäß einem weiteren Ausführungsbeispiel der Erfindung ist das Verbindungselement derart ausgebildet, dass das erste Koppelelement relativ zu dem zweiten Koppelelement senkrecht zur z-Achse bewegbar ist.

Das Verbindungselement kann beispielsweise eine Schraubverbindung oder eine Niete sein, welche sich durch zwei in beiden Koppelelementen ausgebildeten Öffnungen erstreckt. Dabei kann insbesondere eine Öffnung so groß sein, dass ein zur z-Achse rechtwinkliges relatives Verschieben zwischen beiden Koppelelementen möglich ist.

Gemäß einem weiteren Ausführungsbeispiel der Erfindung ist das erste Koppelelement relativ zu dem zweiten Koppelelement um eine Drehachse verdrehbar, welche durch das Verbindungselement bestimmt ist. Dies hat den Vorteil, dass durch eine einfache Drehbewegung um das Koppelelement, bei der (a) das erste Koppelelement relativ zu dem zweiten Koppelelement und/oder bei der (b) das zweite Koppelelement relativ zu dem ersten Koppelelement gedreht wird, die beschriebene Koppelvorrichtung in eine Zielposition gebracht werden kann, in der die beiden Koppelelemente miteinander verspannt werden können. Zumindest für die beschriebene Drehbewegung, welche um die z-Achse herum erfolgt, muss nicht unbedingt ein Werkzeug verwendet werden.

Gemäß einem weiteren Ausführungsbeispiel der Erfindung ist das erste Koppelelement relativ zu dem zweiten Koppelelement in Bezug zu der z-Achse radial verschiebbar.

Die radiale Verschiebbarkeit kann beispielsweise durch ein Langloch gegeben sein, welches in dem ersten Koppelelement und/oder in dem zweiten Koppelelement ausgebildet ist und durch welches sich das Verbindungselement erstreckt. Das Langloch kann dabei ein in dem betreffenden Koppelelement ausgebildeter Schlitz sein.

Auch im Falle einer radialen Verschiebbarkeit kann (a) das erste Koppelelement relativ zu dem zweiten Koppelelement und/oder kann (b) das zweite Koppelelement relativ zu dem ersten Koppelelement durch einen einfachen manuellen Bedieneingriff in eine Zielposition gebracht werden, in der die beiden Koppelelemente dann miteinander verspannt werden können.

Gemäß einem weiteren Ausführungsbeispiel der Erfindung weist die Vorrichtung ferner ein weiteres Verbindungselement auf, welches die beiden Koppelelemente in beweglicher Weise miteinander verbindet.

Das weitere Verbindungselement kann zusammen mit dem bereits oben beschriebenen Verbindungselement dazu beitragen, dass die beiden Koppelelemente lediglich gegeneinander verschiebbar und nicht gegeneinander verdrehbar sind.

Sowohl im ersten Koppelelement als auch im zweiten Koppelement können dabei jeweils zwei Durchgangslöcher ausgebildet sein. Dabei kann sich durch ein erstes Durchgangsloch das Verbindungselement und durch das zweite Durchgangsloch das weitere Verbindungselement erstrecken. Auch hier können die Durchgangslöcher wieder Langlöcher sein, deren Längsausrichtungen sich senkrecht zu z-Achse erstrecken.

Gemäß einem weiteren Ausführungsbeispiel der Erfindung greifen das Verbindungselement und die Klemmeinrichtung in Bezug zu der z-Achse an einander gegenüberliegenden Stellen an den beiden Koppelelementen an. Dies hat den Vorteil, dass für die spielfreie Klemmung des Stellelements zwischen den beiden Koppelelementen besonders günstige Hebelverhältnisse auftreten können. Dadurch kann die Klemmeinrichtung ohne großen Kraftaufwand von einer Bedienperson betätigt werden.

Es wird darauf hingewiesen, dass die Position der z-Achse durch die radiale Position bestimmt sein kann, in der das Stellelement bzw. der Stößel des Ventils eingeklemmt wird. Im Falle der oben beschriebenen zentralen Öffnung des ersten Koppelelements befindet sich die Position der z-Achse somit innerhalb des ersten (während Montage)und/oder zweiten (in geschlossener Position) Öffnungsbereichs.

Gemäß einem weiteren Ausführungsbeispiel der Erfindung weist die Vorrichtung ferner ein Adapterelement auf, welches mit dem zweiten Koppelelement und dem Anschlusselement koppelbar ist. Dies kann bedeuten, dass das zweite Koppelelement nicht direkt sondern lediglich indirekt über das Adapterelementr mit dem Anschlusselement des Stellantriebs koppelbar ist.

Das Adapterelement kann beispielsweise eine Hülse sein, welche von einer Seite in ein Loch des zweiten Koppelelements eingeschoben werden kann.

Gemäß einem weiteren Ausführungsbeispiel der Erfindung ist das Adapterelement derart ausgeformt, dass bei einer Betätigung der Klemmeinrichtung das Adapterelement zusammen mit dem Stellelement durch die beiden Koppelelemente entlang der z-Achse spielfrei verklemmt wird. Dies hat den Vorteil, dass bei einer Betätigung der Klemmeinrichtung nicht nur die Verbindung zwischen dem ersten Koppelelement und dem Stellelement (z.B. der Stößel des Ventils) sondern automatisch auch die Verbindung zwischen dem zweiten Koppelelement und der Adapterelement spielfrei wird.

Das Adapterelement kann beispielsweise eine Schulter aufweisen, die dem Adapterelement senkrecht zu der z-Achse eine Breite verleiht, so dass das Adapterelement nicht vollständig sondern nur zum Teil durch ein in dem zweiten Koppelelement ausgebildetes Loch hindurch passt.

Gemäß einem weiteren Ausführungsbeispiel der Erfindung weist das Adapterelement eine Querbohrung auf. Dies hat den Vorteil, dass das Adapterelement besonders einfach mit dem entlang der z-Achse beweglichen Anschlusselement des Stellantriebs gekoppelt werden kann.

Gemäß einem weiteren Ausführungsbeispiel der Erfindung ist die Klemmeinrichtung eine Schraube, welche eine Hinterdrehung aufweist. Die kann den Vorteil haben, dass die gesamte Vorrichtung so realisiert werden kann, dass beispielsweise bei einer Montagetätigkeit, bei der der Ventil-Stellantrieb mit dem Anschlusselement des Stellantriebs gekoppelt wird, keine Teile der Vorrichtung verloren werden können.

Gemäß einem weiteren Aspekt der Erfindung wird ein Verfahren zum mechanischen Koppeln eines Stellelements eines Ventils mit einem Anschlusselement eines Stellantriebs beschrieben, wobei das Stellelement zum Zwecke einer Verstellung des Ventils entlang einer z-Achse verschiebbar ist und wobei das Anschlusselement bei einer entsprechenden Orientierung des Stellantriebs relativ zu dem Ventil mittels des Stellantriebs ebenfalls entlang der z-Achse verschiebbar ist. Das beschriebene Verfahren weist auf (a) ein Koppeln eines ersten Koppelelements mit dem Stellelement, so dass zwischen dem ersten Koppelelement und dem Stellelement entlang der z-Achse zumindest eine gewisse Bewegungsfreiheit gegeben ist, (b) ein Koppeln eines zweiten Koppelelements mit dem Anschlusselement, wobei das zweite Koppelelement mittels eines Verbindungselements mit dem ersten Koppelelement verbunden ist, und (c) ein Betätigen einer Klemmeinrichtung, welche an dem ersten Koppelelement und/oder an dem zweiten Koppelelement angeordnet, so dass (c1) die beiden Koppelelemente gegeneinander verspannt werden und (c2) ein mit dem ersten Koppelelement gekoppeltes Stellelement mit den beiden Koppelelementen entlang der z-Achse spielfrei verklemmt wird.

Auch dem beschriebenen Koppelverfahren liegt die Erkenntnis zugrunde, dass bei einer Herstellung der mechanischen Kopplung zwischen dem Stellelement und dem Anschlusselement zunächst zumindest ein gewisses Spiel bzw. eine gewisse Bewegungsfreiheit in axialer Richtung (z-Richtung) das Herstellen dieser Kopplung erleichtert. Durch Betätigen der Klemmeinrichtung wird dieses axiale Spiel kontinuierlich bis auf "Null" reduziert, so dass das System bestehend aus den beiden Koppelelementen und dem Stellelement spielfrei wird. Gemäß einem Ausführungsbeispiel der Erfindung weist das Verfahren ferner auf ein Verschieben das ersten Koppelelements relativ zu dem zweiten Koppelelement senkrecht zur z-Achse, wobei das Verschieben nach dem Koppeln eines ersten Koppelelements mit dem Stellelement und vor dem Betätigen der Klemmeinrichtung durchgeführt wird. Dies hat den Vorteil, dass die Kopplung des ersten Koppelelements mit dem Stellelement ohne oder mit lediglich einer geringen räumlichen Behinderung durch das zweite Koppelelement durchgeführt werden kann. Damit ist das beschriebene Koppelverfahren auf besonders einfache Weise durchführbar.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen.
- Figur 1a: zeigt in einer Explosionsdarstellung eine Koppelvorrichtung, welche zwei flächige Koppelelemente aufweist, welche zum Zwecke der Verriegelung mit einem Stößel eines Ventils relativ zueinander radial verschiebbar sind.
- Figur 1b: zeigt die Koppelvorrichtung in einer perspektivischen Darstellung.

- Figur 1c: zeigt die Koppelvorrichtung in einer Querschnittsdarstellung.
- Figur 2a: bis 2h zeigt eine Abfolge von verschiedenen Montageschritten zum mechanischen Koppeln eines Stellantriebs an ein HLK-Ventil unter Verwendung der in den Figuren 1a bis 1c dargestellten Koppelvorrichtung.

Zur Vermeidung von unnötigen Wiederholungen werden bereits anhand einer vorher beschriebenen Figur erläuterte Merkmale bzw. Komponenten an späterer Stelle nicht mehr im Detail erläutert. Ferner stellt die nachfolgend anhand der Zeichnung beschriebene Ausführungsform lediglich eine beschränkte Auswahl an möglichen Ausführungsvarianten der Erfindung dar.

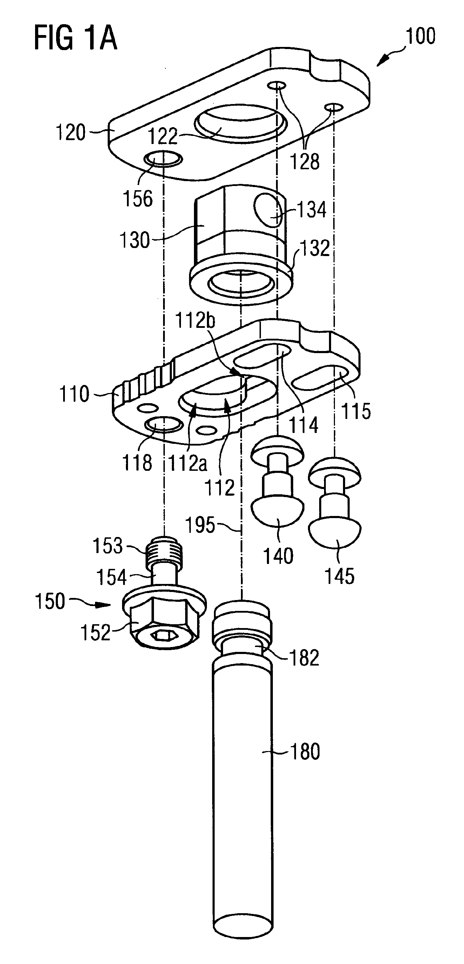

Figur 1a zeigt in einer Explosionsdarstellung eine Koppelvorrichtung 100 gemäß einem bevorzugten Ausführungsbeispiel der Erfindung. Die Koppelvorrichtung weist zwei flächige als Platten ausgebildete Koppelelemente auf, welche mit den Bezugszeichen 110 und 120 versehen sind. Nachfolgend wird das Koppelelement 110 als erstes Koppelelement 110 und das Koppelelement 120 als zweites Koppelelement 120 bezeichnet.

Die beiden Koppelelemente 110 und 120 sind mittels eines Verbindungselements 140 und mittels eines weiteren Verbindungselements 145 in beweglicher Weise miteinander verbunden. Gemäß dem hier dargestellten Ausführungsbeispiel sind die Verbindungselemente 140 und 145 Nieten. In dem zweiten Koppelelement 120 sind deshalb zwei Durchgangslöcher 128 ausgebildet, durch welche sich die beiden Nieten 140, 145 erstrecken. Wie aus Figur 1a ersichtlich, sind in dem ersten Koppelelement 120 zwei Langlöcher 114 und 115 ausgebildet. Im zusammengebauten Zustand erstreckt sich die Niete 140 durch das Langloch 114 und die Niete 145 erstreckt sich durch das Langloch 115. Die beiden Langlöcher 114 und 115 ermöglichen in Bezug zu einer z-Achse 195 eine begrenzte radiale Verschiebbarkeit des ersten Koppelelements 110 relativ zu dem zweiten Koppelelement 120.

In dem zweiten Koppelelement 120 ist ferner ein Loch 122 ausgebildet, durch welche ein oberer Teil eines Adapterelements 130 schiebbar ist. Gemäß dem hier dargestellten Ausführungsbeispiel ist das Adapterelement eine Hülse 130, welche an ihrem unteren Teil eine als Schulter ausgebildete Aufweitung 132 aufweist. Die Hülse 130 weist ferner eine Querbohrung 134 auf. Mittels der Querbohrung kann die Hülse 130 mit einem in Figur 1a nicht dargestellten Anschlusselement eines Ventil-Stellantriebs gekoppelt werden.

In dem zweiten Koppelelement 120 ist ferner eine mit einem Innengewinde versehene Bohrung 156 ausgebildet. Die Funktion dieser Bohrung 156 wird nachfolgend noch genauer erläutert.

Wie aus Figur 1a ersichtlich, weist das erste Koppelelement 110 eine zentrale Durchgangsöffnung 112 auf. Die Durchgangsöffnung 112 weist die Form eines Schlüssellochs mit einem ersten Öffnungsbereich 112a und einen zweiten Öffnungsbereich 112b auf, wobei die beiden Öffnungsbereiche 112a, 112b unterschiedlich groß sind. Die Längsrichtungen des Schlüssellochs 112 und der beiden Langlöcher 114 und 115 sind gleich orientiert. Durch den ersten größeren Öffnungsbereich 112a kann der obere Abschnitt eines Stellelements 180 durchgeschoben werden, welches gemäß dem hier dargestellten Ausführungsbeispiel ein Stößel 180 ist. Der zweite Öffnungsbereich 112b ist so klein, dass er den oberen Abschnitt des Stößels 180 nur deshalb aufnehmen kann, weil darin eine Ringnut 182 ausgebildet ist. In diese Ringnut 182 kann nämlich eine den zweiten Öffnungsbereich 112b begrenzende Kante des ersten Koppelelements 110 eingreifen. Da die Ringnut 182 längs zu der z-Achse 195 eine Breite aufweist, die etwas größer ist als die Dicke des ersten Koppelelements 110, kann der Stößel 180 von einer Bedienperson ohne ein Verkanten irgendeiner Art besorgen zu müssen, durch eine Bewegung senkrecht zur z-Achse 195 in den zweiten Öffnungsbereich 112b eingeschoben werden. Dadurch wird der Stößel 180 entlang der z-Achse mit einem gewissen Spiel bzw. mit einer gewissen Bewegungsfreiheit an dem ersten Koppelelement 110 fixiert.

Mittels einer Klemmeinrichtung 150, welche gemäß dem hier dargestellten Ausführungsbeispiel ebenfalls ein Bestandteil der Koppelvorrichtung 100 ist, wird dieses axiale Spiel eliminiert. Die Klemmeinrichtung 150 weist eine Schraube 152 auf, an deren Spitze ein Außengewinde 153 ausgebildet ist. Wie aus Figur 1a ersichtlich, erstreckt sich die Schraube 152 durch ein Durchgangsloch 118, welches in dem ersten Koppelelement 110 ausgebildet ist. Zwischen einem Schraubenkopf der Schraube 152 und dem vorderen Ende der Schraube 152 mit dem Außengewinde 153 befindet sich eine sog. Hinterdrehung 154. Mittels dieser Hinterdrehung 154 kann gewährleistet werden, dass die Schraube 152 nicht aus dem Durchgangsloch 118 herausfallen kann. Die gesamte Koppelvorrichtung 100 kann somit ohne lose Bauteile wie Schrauben oder Muttern, welche bei einer Montage oder einer Demontage der Koppelvorrichtung 100 leicht verloren werden können, ausgeführt werden.

Das Außengewinde 153 der Schraube 152 ist zu dem Innengewinde der Bohrung 156 komplementär, so dass im zusammengebauten Zustand der Koppelvorrichtung 100 bei einem Betätigen der Klemmeinrichtung 150 das Koppelelement 110 dabei über die Spitze des Stößels 180 (oberhalb der Ringnut 182) und dessen Stirnfläche mit der Hülse 130 fest einklemmen. Dadurch wird die oben beschriebene Bewegungsfreiheit entlang der z-Achse 195 des Stößels 180 gegenüber der Hülse 130 eliminiert.

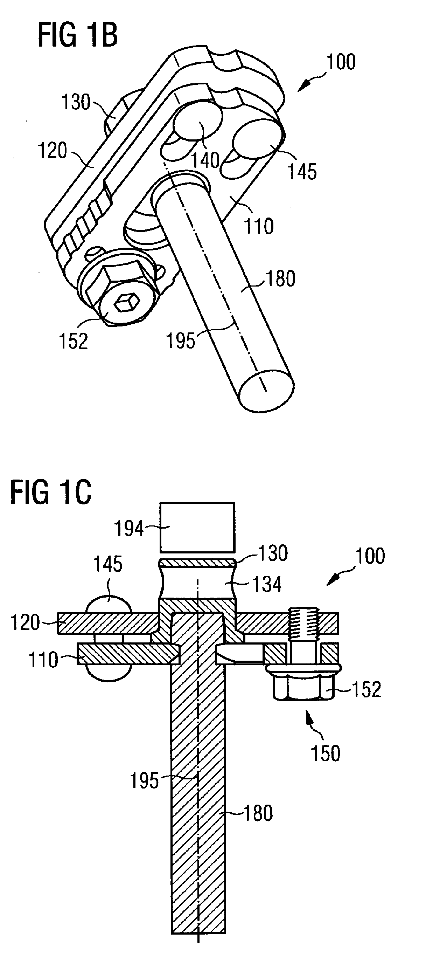

Figur 1b zeigt in einer perspektivischen Darstellung die Koppelvorrichtung 100, nachdem die einzelnen Komponenten zusammengefügt wurden und die Klemmeinrichtung 150 betätigt wurde. Figur 1c zeigt die zusammengefügte Koppelvorrichtung 100 in einer Querschnittsdarstellung.

Die Spitze des Stößels 180 erstreckt sich in eine Öffnung der Hülse 130. Dadurch sind Stößel 180 und Hülse 130 senkrecht zur z-Achse relativ zueinander fixiert. Die betätigte Klemmeinrichtung 150 und die beiden Verbindungselementen 140, 145 greifen in Bezug zu der z-Achse 195 an einander gegenüberliegenden Stellen an den beiden Koppelelementen 110, 120 an. Dadurch werden sowohl der unterer Teil der Hülse 130 als auch der obere Teil des Stößels 180 zwischen den beiden Koppelelementen 110, 120 eingespannt. Infolge dieser relativen räumlichen Anordnung der beiden Verbindungselemente 140, 145 zu der Klemmeinrichtung 150 liegen für eine Klemmung von Hülse 130 und Stößel 180 besonders günstige Hebelverhältnisse vor. Dadurch kann die Klemmeinrichtung 150 ohne großen Kraftaufwand von einer Bedienperson beispielsweise mit einem Schraubenschlüssel durchgeführt werden.

Das zweite Koppelement 120 und/oder das erste Koppelelement 110 kann plastisch deformierbar sein. Dies hat den Vorteil, dass ein übermäßiges Anziehen der Schraube 152 nicht zu einer Beschädigung der Koppelvorrichtung 100 führt. So kann beispielsweise bei einer übermäßig kraftvollen Betätigung der Klemmeinrichtung zumindest eines der beiden Koppeleinrichtungen innerhalb seiner zulässigen Deformationen zumindest teilweise reversibel verbogen werden. Dabei können neben elastischen auch plastische Deformationen auftreten, welche jedoch die Funktionalität der gesamten Koppelvorrichtung nicht beeinträchtigen.

In Figur 1c ist noch schematisch ein Anschlusselement 194 dargestellt, welches einem Ventil-Stellantrieb zugeordnet ist und welches in nicht dargestellter Weise mit der Hülse 130 mechanisch verbunden werden kann. Dazu kann in nicht dargestellter Weise ein Verbindungssteg des Anschlusselements 194 verwendet werden, welcher parallel zur z-Achse möglichst spielfrei in die Querbohrung 134 eingeschoben wird und so das Anschlusselement 194 mit der Koppelvorrichtung und damit auch mit dem Stößel 180 verbindet.

Es wird darauf hingewiesen, dass gemäß dem hier dargestellten Ausführungsbeispiel die Schraube 152 nur dann in die mit dem Innengewinde versehene Bohrung 156 eingeschraubt werden kann, wenn sich das erste Koppelelement 110 in seiner radialen Endposition befindet. Damit ist eine Fehlmontage in einer halb geöffneten Position des ersten Koppelelements 110 nicht möglich. Außerdem erkennt ein Monteur bereits durch die Möglichkeit die Schraube 152 anzuziehen, dass die Koppelvorrichtung 100 korrekt montiert worden ist.

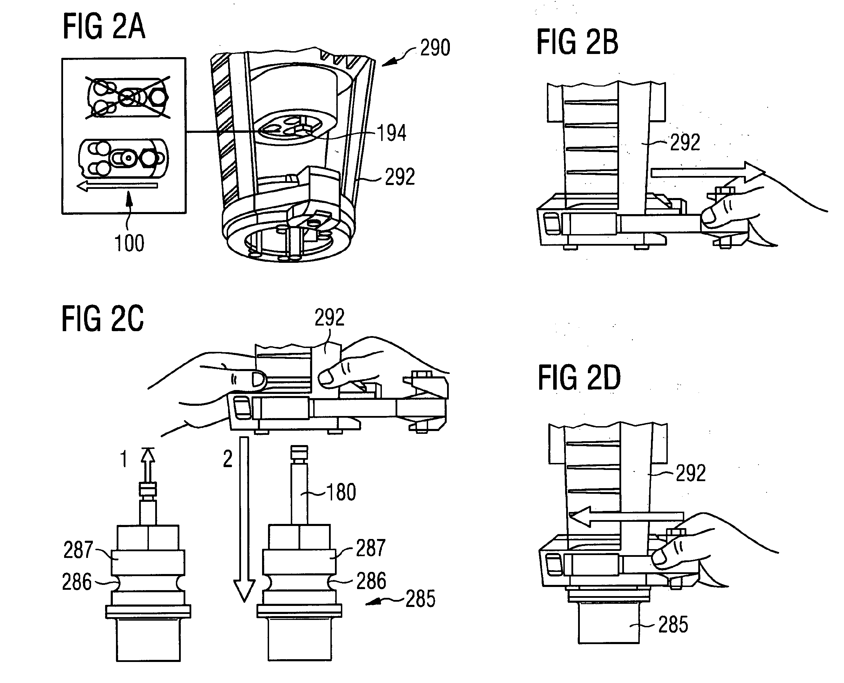

Die Figur 2a bis 2h zeigen eine Abfolge von verschiedenen Montageschritten zum mechanischen Koppeln eines Stellantriebs an ein HLK-Ventil unter Verwendung der Koppelvorrichtung 100.

Figur 2a zeigt einen ersten Montageschritt. Dabei wird zunächst die Koppelvorrichtung 100 so eingestellt, dass sich das erste Koppelelement in der offenen Position befindet (relativ zu dem zweiten Koppelelement in einer radial verschobenen Versatzposition). Diese Position ist in dem Einsatz von Figur 2a in der unteren der beiden Abbildungen dargestellt.

Figur 2b zeigt einen zweiten Montageschritt. Dabei wird ein U-förmiges Halteelement, welches an dem unteren Ende des Verbindungschassis 292 angeordnet ist, vorübergehend aus seiner Normalposition radial nach außen in eine Montageposition verschoben.

Figur 2c zeigt einen dritten Montageschritt. Dabei wird zunächst der Stößel 180 des Ventils 285 nach oben geschoben. Dies erleichtert ein späteres Verbinden des Stößels 180 mit der Koppelvorrichtung 100, welche bereits an dem Stellantrieb 290 bzw. an dem Anschlusselement (nicht dargestellt) des Stellantriebs 290 angebracht ist. Nach dem Anheben des Stößels 180 wird das Verbindungschassis 292 auf einen Anschlussstutzen 287 bzw. auf einen Ventilhals des Ventils 285 aufgesetzt. Da sich das Halteelement immer noch in der Montageposition befindet, kann das Verbindungschassis 292 ohne eine Behinderung durch das Halteelement aufgesetzt werden.

Figur 2d zeigt einen vierten Montageschritt. Dabei wird das Halteelement von der Montageposition radial nach innen in die Normalposition geschoben. In der Normalposition greifen die beiden Schenkel des Halteelements von außen in eine Ringnut 266 ein. Dadurch ist bis auf ein kleines Spiel in axialer Richtung (entlang der z-Achse) und in Bezug auf die Drehwinkellage die relative Lage zwischen dem Verbindungschassis 292 bzw. dem Stellantrieb 290 auf der einen Seite und dem Anschlussstutzen 287 bzw. dem Ventil 285 auf der anderen Seite festgelegt.

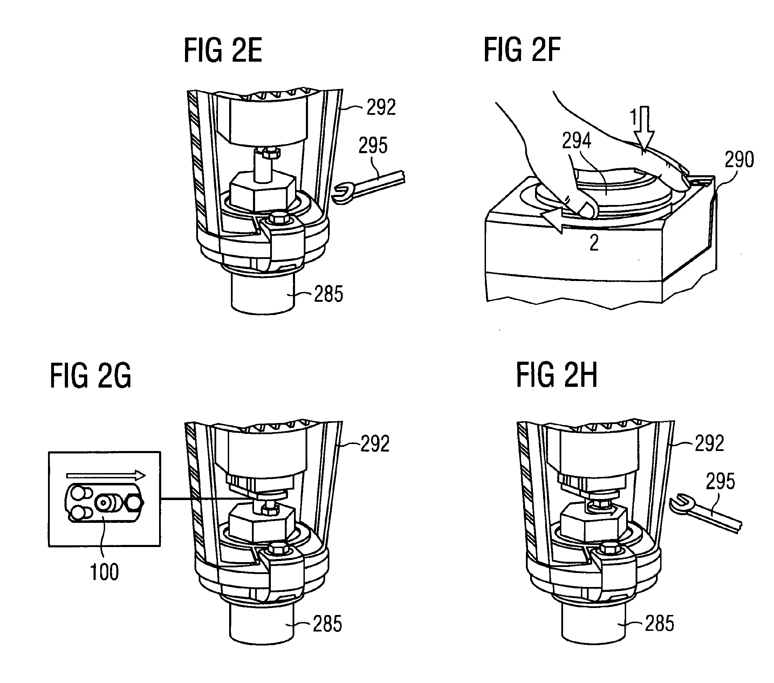

Figur 2e zeigt einen fünften Montageschritt. Dabei wird mittels eines Schraubenschlüssels 295 eine Schraube des Halteelements derart angezogen, dass sich die beiden Schenkel des Halteelements in der Ringnut 286 verkanten. Dadurch wird eine spielfreie Verklemmung des Systems bestehend aus Verbindungschassis 292, Halteelement und Ventil 285 erreicht.

Figur 2f zeigt einen sechsten Montageschritt. Dabei wird von einer Bedienperson ein als Handrad ausgebildetes Handbetätigungselement 294 so verstellt, dass sich das Anschlusselement des Stellantriebes 290 axial zu dem Stößel 180 bewegt.

Figur 2g zeigt einen siebten Montageschritt. Das Anschlusselement und der Stößel 180 befinden sind so nahe beieinander, dass sie miteinander verbunden werden können. Dabei wird das erste Koppelelement der Koppelvorrichtung 100 relativ zu dem zweiten Koppelelement und zu der z-Achse wieder radial nach innen verschoben, so dass sich der Stößel 180, wie in Figur 1c dargestellt, in dem zweiten Öffnungsbereich 112b (siehe Figur 1a) befindet. Wie bereits oben beschrieben, ist damit die relative axiale Lage zwischen dem Stößel 180 und der Koppelvorrichtung 100 bis auf eine gewisse Bewegungsfreiheit festgelegt.

Figur 2h zeigt einen achten Montageschritt. Die Klemmeinrichtung der Koppelvorrichtung 100 wird mittels des Schraubenschlüssels 295 betätigt. Dadurch wird die Spitze des Stößels 180 spielfrei zwischen den beiden Koppelelementen eingeklemmt.

Zusammenfassend bleibt folgendes festzustellen: Mit der in diesem Dokument beschriebenen Koppelvorrichtung kann auf einfache Weise eine axial spielfreie Kopplung zwischen dem Stellelement (Stößel) eines Ventils und dem Anschlusselement eines Stellantriebs hergestellt werden. Dabei wird zunächst zwischen dem Ende des Stößels und dem ersten Kopplungselement, welches eine schlüssellochartige Öffnung aufweisen kann, eine formschlüssige Verbindung hergestellt. Das Herstellen der formschlüssigen Verbindung bzw. das Schließen der Kupplung erfolgt durch eine in Bezug zu der z-Achse radiale Verschiebung des ersten Kopplungselements. Mittels der Schraube der Klemmeinrichtung wird dann das zweite Kopplungselement mit dem ersten Kopplungselement axial verspannt. Dadurch wird das Ende des Stellelements (Stößel) axial spielfrei.

Die beschriebene Koppelvorrichtung 100 hat den Vorteil, dass der Stellantrieb und das Ventil in beliebiger Drehwinkel-Lage um die z-Achse (Stößel-Achse) aneinander montiert werden können. Montage und Demontage können von einem Fachpersonal mit gängigen Werkzeugen durchgeführt werden.

Die beschriebene Koppelvorrichtung 100 hat ferner den Vorteil, dass das Spannen bzw. das spielfreie Sichern der Koppelvorrichtung 100 mittels lediglich einer einzigen Schraube realisiert werden kann.

### Bezugszeichenliste

- 100: Koppelvorrichtung
- 110: erstes Koppelelement
- 112: zentrale Öffnung
- 112a: erster Öffnungsbereich
- 112b: zweiter Öffnungsbereich
- 114: Langloch
- 115: Langloch
- 118: Durchgangsloch (für Klemmeinrichtung)
- 120: zweites Koppelelement
- 122: Loch
- 128: Durchgangsloch (für Verbindungselemente)
- 130: Adapterelement / Hülse
- 132: Schulter / Aufweitung
- 134: Querbohrung
- 140: Verbindungselement / Niete
- 145: weiteres Verbindungselement / Niete
- 150: Klemmeinrichtung
- 152: Schraube
- 153: Außengewinde
- 154: Hinterdrehung
- 156: Bohrung mit Innengewinde
- 180: Stellelement / Stößel
- 182: Ringnut
- 194: Anschlusselement
- 195: z-Achse
- 285: Ventil
- 286: Ringnut
- 287: Anschlussstutzen
- 290: Stellantrieb
- 292: Verbindungschassis
- 294: Handbetätigungselement
- 295: Schraubenschlüssel

## Patentansprüche

1. Vorrichtung zum mechanischen Koppeln eines Stellelements (180) eines Ventils (285) mit einem Anschlusselement (194) eines Stellantriebs (290),
wobei das Stellelement (180) zum Zwecke einer Verstellung des Ventils (285) entlang einer z-Achse (195) verschiebbar ist und
wobei das Anschlusselement (194) bei einer entsprechenden Orientierung des Stellantriebs (290) relativ zu dem Ventil (285) mittels des Stellantriebs (290) ebenfalls entlang der z-Achse (195) verschiebbar ist, die Vorrichtung (100) aufweisend
• ein erstes Koppelelement (110), welches mit dem Stellelement (180) derart koppelbar ist, dass zwischen dem ersten Koppelelement (110) und dem Stellelement (180) entlang der z-Achse (195) zumindest eine gewisse Bewegungsfreiheit gegeben ist,
• ein zweites Koppelelement (120), welches mit dem Anschlusselement (194) koppelbar,
• ein Verbindungselement (140), welches die beiden Koppelelemente (110, 120) in beweglicher Weise miteinander verbindet, und
• eine Klemmeinrichtung (150), welche an dem ersten Koppelelement (110) und/oder an dem zweiten Koppelelement (120) angeordnet ist und welche derart ausgebildet ist, dass bei einer Betätigung der Klemmeinrichtung (150)
- die beiden Koppelelemente (110, 120) gegeneinander verspannt werden und
- das mit dem ersten Koppelelement (110) gekoppelte Stellelement (180) mit den beiden Koppelelementen (110, 120) entlang der z-Achse (195) spielfrei verklemmt wird, **dadurch gekennzeichnet,**
**dass** das erste Koppelelement (110) eine zentrale Öffnung (112) aufweist, welche einen ersten Öffnungsbereich (112a) und einen zweiten Öffnungsbereich (112b) umfasst,
- wobei der erste Öffnungsbereich (112a) derart dimensioniert ist,
**dass** zumindest ein oberer Abschnitt des Stellelements (180) durch den ersten Öffnungsbereich (112a) durchführbar ist, und
- wobei der zweite Öffnungsbereich (112b) derart dimensioniert ist,
**dass** eine den zweiten Öffnungsbereich (112b) begrenzende Kante des ersten Koppelelements (110) in eine an dem oberen Abschnitt des Stellelements (180) ausgebildete Ausnehmung (182) eingreifen kann, so dass abgesehen von der gewissen Bewegungsfreiheit zwischen dem ersten Koppelelement (110) und dem Stellelement (180) entlang der z-Achse (195) eine Fixierung des Stellelements (180) an dem ersten Koppelelement (110) erfolgt.

2. Vorrichtung nach dem vorangehenden Anspruch, wobei das erste Koppelelement (110) und/oder das zweite Koppelelement (120) eine flächige Form aufweisen.

3. Vorrichtung nach einem der vorangehenden Ansprüche, wobei das Verbindungselement (140) derart ausgebildet ist, dass das erste Koppelelement (110) relativ zu dem zweiten Koppelelement (120) senkrecht zur z-Achse (195) bewegbar ist.

4. Vorrichtung nach dem vorangehenden Anspruch, wobei das erste Koppelelement relativ zu dem zweiten Koppelelement um eine Drehachse verdrehbar ist, welche durch das Verbindungselement bestimmt ist.

5. Vorrichtung nach dem vorangehenden Anspruch 3, wobei das erste Koppelelement (110) relativ zu dem zweiten Koppelelement (120) in Bezug zu der z-Achse (195) radial verschiebbar ist.

6. Vorrichtung nach dem vorangehenden Anspruch, ferner aufweisend
• ein weiteres Verbindungselement (145), welches die beiden Koppelelemente (110, 120) in beweglicher Weise miteinander verbindet.

7. Vorrichtung nach einem der vorangehenden Ansprüche, wobei das Verbindungselement (140) und die Klemmeinrichtung (150) in Bezug zu der z-Achse (195) an einander gegenüberliegenden Stellen an den beiden Koppelelementen (110, 120) angreifen.

8. Vorrichtung nach einem der vorangehenden Ansprüche, ferner aufweisend
• ein Adapterelement (130), welches mit dem zweiten Koppelelement (120) und dem Anschlusselement (194) koppelbar ist.

9. Vorrichtung nach dem vorangehenden Anspruch, wobei das Adapterelement (130) derart ausgeformt ist, dass bei einer Betätigung der Klemmeinrichtung (150) das Adapterelement (130) zusammen mit dem Stellelement (180) durch die beiden Koppelelemente (110, 120) entlang der z-Achse (195) spielfrei verklemmt wird.

10. Vorrichtung nach einem der vorangehenden Ansprüche 8 bis 9, wobei
das Adapterelement (130) eine Querbohrung (134) aufweist.

11. Vorrichtung nach einem der vorangehenden Ansprüche, wobei die Klemmeinrichtung eine Schraube (150) ist, die eine Hinterdrehung (154) aufweist.

## Claims

1. Device for mechanically coupling an actuating element (180) of a valve (285) to a connection element (194) of an actuator (290),
wherein the actuating element (180) can be displaced along a z-axis (195) for the purpose of adjusting the valve (285) and wherein the connection element (194), given a corresponding orientation of the actuator (290) relative to the valve (285), can likewise be displaced along the z-axis (195) by means of the actuator (290), the device (100) having
• a first coupling element (110) which can be coupled to the actuating element (180) such that at least a certain freedom of movement is provided between the first coupling element (110) and the actuating element (180) along the z-axis (195),
• a second coupling element (120) which can be coupled to the connection element (194),
• a connecting element (140) which links the two coupling elements (110, 120) to each other in a movable manner, and
• a clamping device (150) which is arranged on the first coupling element (110) and/or on the second coupling element (120) and which is embodied such that upon an actuation of the clamping device (150)
- the two coupling elements (110, 120) are braced against each other and
- the actuating element (180) coupled to the first coupling element (110) is clamped with the two coupling elements (110, 120) along the z-axis (195) without any play, **characterised in that**
the first coupling element (110) has a central opening (112) which comprises a first opening area (112a) and a second opening area (112b),
- wherein the first opening area (112a) is dimensioned such that
at least one upper section of the actuating element (180) can be passed through the first opening area (112a), and
- wherein the second opening area (112b) is dimensioned such that
an edge of the first coupling element (110) delimiting the second opening area (112b) can engage in a recess (182) embodied on the upper section of the actuating element (180) such that, apart from the certain freedom of movement between the first coupling element (110) and the actuating element (180) along the z-axis (195), the actuating element (180) is fixed to the first coupling element (110).

2. Device according to the preceding claim, wherein the first coupling element (110) and/or the second coupling element (120) have/has a flat shape.

3. Device according to one of the preceding claims, wherein the connecting element (140) is embodied such that the first coupling element (110) can be displaced relative to the second coupling element (120) at right angles to the z-axis (195).

4. Device according to one of the preceding claims, wherein the first coupling element can be rotated relative to the second coupling element about an axis of rotation which is defined by the connecting element.

5. Device according to the preceding claim 3, wherein the first coupling element (110) can be displaced radially relative to the second coupling element (120) in relation to the z-axis (195).

6. Device according to the preceding claim, additionally having
• a further connecting element (145) which links the two coupling elements (110, 120) to each other in a movable manner.

7. Device according to one of the preceding claims, wherein the connecting element (140) and the clamping device (150) engage at points disposed opposite each other on the two coupling elements (110, 120) in relation to the z-axis (195).

8. Device according to one of the preceding claims, additionally having
• an adapter element (130) which can be coupled to the second coupling element (120) and the connection element (194).

9. Device according to the preceding claim, wherein the adapter element (130) is embodied in such a way that when the clamping device (150) is actuated
the adapter element (130) together with the actuating element (180) is clamped by means of the two coupling elements (110, 120) along the z-axis (195) without play.

10. Device according to one of the preceding claims 8 to 9, wherein
the adapter element (130) has a transverse hole (134).

11. Device according to one of the preceding claims, wherein the clamping device is a bolt (150) having an undercut (154).

## Revendications

1. Dispositif pour le couplage mécanique d'un élément d'actionnement (180) d'une soupape (285) avec un élément de raccordement (194) d'un mécanisme de commande (290),
dans lequel l'élément d'actionnement (180), en vue de régler la soupape (285), est déplaçable le long d'un axe z (195) et dans lequel l'élément de raccordement (194), dès lors que l'orientation du mécanisme de commande (290) par rapport à la soupape (285) est à l'avenant, est également déplaçable le long de l'axe z (195) au moyen du mécanisme de commande (290), ledit dispositif (100) comprenant
• un premier élément de couplage (110), lequel peut être couplé avec l'élément d'actionnement (180) de telle sorte qu'il existe au moins une certaine liberté de mouvement le long de l'axe z (195) entre le premier élément de couplage (110) et l'élément d'actionnement (180),
• un deuxième élément de couplage (120), lequel peut être couplé avec l'élément de raccordement (194),
• un élément de liaison (140), lequel relie entre eux les deux éléments de couplage (110, 120) de manière mobile, et
• un dispositif de serrage (150), placé sur le premier élément de couplage (110) et/ou sur le deuxième élément de couplage (120) et conçu de telle sorte que lorsque le dispositif de serrage (150) est actionné
- les deux éléments de couplage (110, 120) viennent se serrer l'un contre l'autre et
- l'élément d'actionnement (180), couplé avec le premier élément de couplage (110), est coincé sans jeu le long de l'axe z (195) par les deux éléments de couplage (110, 120), **caractérisé en ce que**
le premier élément de couplage (110) présente une ouverture centrale (112), comprenant une première zone d'ouverture (112a) et une deuxième zone d'ouverture (112b),
- la première zone d'ouverture (112a) étant dimensionnée de telle sorte
qu'au moins une partie supérieure de l'élément d'actionnement (180) puisse passer à travers la première zone d'ouverture (112a), et
- la deuxième zone d'ouverture (112b) étant dimensionnée de telle sorte
qu'un bord du premier élément de couplage (110) limitant la deuxième zone d'ouverture (112b) puisse s'engager dans un évidement (182) formé sur la partie supérieure de l'élément d'actionnement (180), de sorte qu'en dehors de ladite liberté de mouvement entre le premier élément de couplage (110) et l'élément d'actionnement (180) le long de l'axe z (195), on obtient une fixation de l'élément d'actionnement (180) sur le premier élément de couplage (110).

2. Dispositif selon la revendication précédente, dans lequel le premier élément de couplage (110) et/ou le deuxième élément de couplage (120) ont une forme plane.

3. Dispositif selon l'une des revendications précédentes, dans lequel l'élément de liaison (140) est conçu de façon à ce que le premier élément de couplage (110) soit mobile par rapport au deuxième élément de couplage (120) perpendiculairement à l'axe z (195).

4. Dispositif selon la revendication précédente, dans lequel le premier élément de couplage, relativement au deuxième élément de couplage, peut tourner autour d'un axe de rotation défini par l'élément de liaison.

5. Dispositif selon la revendication précédente, dans lequel le premier élément de couplage (110), relativement au deuxième élément de couplage (120), est déplaçable radialement par rapport à l'axe z (195).

6. Dispositif selon la revendication précédente, comprenant en outre
• un autre élément de liaison (145), lequel relie entre eux les deux éléments de couplage (110, 120) de manière mobile.

7. Dispositif selon l'une des revendications précédentes, dans lequel l'élément de liaison (140) et le dispositif de serrage (150) viennent en prise avec les deux éléments de couplage (110, 120) à des endroits opposés par rapport à l'axe z (195).

8. Dispositif selon l'une des revendications précédentes, comprenant en outre
• un élément adaptateur (130), lequel peut être couplé avec le deuxième élément de couplage (120) et l'élément de raccordement (194).

9. Dispositif selon la revendication précédente, dans lequel l'élément adaptateur (130) est formé de telle sorte que lorsque le dispositif de serrage (150) est actionné, l'élément adaptateur (130) est coincé sans jeu ensemble avec l'élément d'actionnement (180) le long de l'axe z (195) par les deux éléments de couplage (110, 120).

10. Dispositif selon l'une des revendications précédentes 8 à 9, dans lequel l'élément adaptateur (130) présente un alésage transversal (134).

11. Dispositif selon l'une des revendications précédentes, dans lequel le dispositif de serrage est une vis (150) qui présente un détalonnage autour (154).
